# EUROPÄISCHE PATENTSCHRIFT

(11) **EP 1 606 825 B1**
(45) Veröffentlichungstag und Bekanntmachung des Hinweises auf die Patenterteilung: **05.12.2007**
(21) Anmeldenummer: 04763032.2
(22) Anmeldetag: 26.06.2004
(51) Int. Cl.: G21C 5/00

(54) **VERFAHREN ZUM RECHNERISCHEN MODELLIEREN DES KERNS EINES KERNREAKTORS**
COMPUTER MODELLING METHOD FOR THE CORE OF A NUCLEAR REACTOR
PROCEDE DE MODELISATION INFORMATIQUE DU COEUR D'UN REACTEUR NUCLEAIRE

(30) Priorität: 26.06.2003 DE 10328920
(43) Veröffentlichungstag der Anmeldung: 21.12.2005
(73) Patentinhaber: AREVA NP GmbH, 91058 Erlangen (DE)
(72) Erfinder: BÖER, Rainer, 90592 Schwarzenbruck (DE); HETZELT, Lothar, 91056 Erlangen (DE); KIEHLMANN, Horst, Dieter, 91301 Forchheim (DE); WINTER, Hans-Joachim, 91056 Erlangen (DE)
(74) Vertreter: Mörtel & Höfner
(86) Internationale Anmeldenummer: PCT/EP2004/006955
(87) Internationale Veröffentlichungsnummer: WO 2004/114321

(56) Entgegenhaltungen:
- FR-A- 2 833 400
- US-A- 5 171 516
- US-A- 5 638 413
- M. TATSUMI, A. YAMAMOTO: "SCOPE2: Object-oriented parallel code for multi-group diffusion/transport calculations in three-dimensional fine-mesh reactor core geometry" 7. Oktober 2002 (2002-10-07), PHYSOR 2002 , SEOUL - KOREA , XP008048620 in der Anmeldung erwähnt das ganze Dokument
- PATENT ABSTRACTS OF JAPAN Bd. 2000, Nr. 22, 9. März 2001 (2001-03-09) & JP 2001 133581 A (HITACHI LTD), 18. Mai 2001 (2001-05-18)
- PATENT ABSTRACTS OF JAPAN Bd. 1998, Nr. 14, 31. Dezember 1998 (1998-12-31) & JP 10 239480 A (TOSHIBA CORP), 11. September 1998 (1998-09-11)

## Beschreibung

Die Erfindung bezieht sich auf ein Verfahren zum rechnerischen Modellieren des Kerns eines Kernreaktors.

Zur wirtschaftlichen Auslegung des Kerns eines Kernreaktors bei gleichzeitiger Einhaltung ausreichender Sicherheitsreserven ist es erforderlich, dessen neutronenphysikalische und thermohydraulische Eigenschaften möglichst präzise rechnerisch zu modellieren. Aufgrund der Komplexität der im Kern stattfindenden Prozesse sowie der Heterogenität seines strukturellen Aufbaus, sind geschlossene Lösungen der die physikalischen Eigenschaften des Kerns beschreibenden Gleichungen nicht möglich, so dass auf approximative numerische Verfahren zurückgegriffen werden muss.

Bekannte Verfahren zur rechnerischen Modellierung eines Reaktors sind nodale Berechnungsverfahren, deren Grundzüge beispielsweise in [1] und [2] näher erläutert sind. Bei diesen Berechnungsverfahren wird der Kern in ein grobmaschiges Gitter mit einer Vielzahl von quaderförmigen Maschen (oder Boxen) aufgeteilt. Für viele Anwendungen entspricht die horizontale Maschengröße einem oder einem Viertel Brennelement (Grobmasche). Ein Brennelement wird dann durch eine Vielzahl vertikal, d. h. in Richtung der Brennelementachse übereinander angeordneter Maschen dargestellt. Auf diese Weise wird in der Horizontalebene eine der Anzahl der Brennelemente entsprechende Anzahl von Maschen gebildet. Bei der neutronenphysikalischen Modellierung werden die Maschen auch als Knoten und bei der thermohydraulischen Modellierung als Kanäle bezeichnet. Jede Masche ist räumlich mit den benachbarten Maschen an ihren Grenzflächen über entsprechende integrale (d. h. über die jeweilige Grenzfläche gemittelte) Ströme, beispielsweise Wärmestrom, Neutronenstrom, gekoppelt. Jede Masche ist durch einen Datensatz charakterisiert, der in einer homogenisierten Darstellung ihre mittleren Eigenschaften, beispielsweise makroskopische nodale Wirkungsquerschnitte oder Strömungswiderstandsbeiwerte, wiedergibt. Dieser Datensatz wird in vorgelagerten Rechenverfahren für in der Masche modellhaft herrschende strukturelle Bedingungen (geometrische Struktur, Brennstoff- und Moderatorverteilung, eventuell vorhandene Wasser- oder Strukturrohre usf.) unter idealisierten Randbedingungen (bei der neutronenphysikalischen Modellierung in der Regel Symmetrierandbedingungen, bei denen der jeweilige Strom aus der Masche identisch mit dem in die Masche gerichteten Strom ist) feinmaschig, insbesondere pinweise(pin-by-pin, auf Pinebene), d. h. mit Maschen, die jeweils nur ein Strukturelement (Brennstab, Steuerstab u. dgl.) des Brennelements enthalten, beispielsweise für die Neutronik mit Hilfe eines Spektralcodes, berechnet.

Um im Rahmen des grobmaschigen nodalen Berechnungsverfahrens präzisere Aussagen über die Feinstruktur der neutronenphysikalischen und thermohydraulischen Verhältnisse innerhalb einer Grobmasche, d. h. auf Pinebene zu erhalten, müssen die für eine Masche jeweils berechneten grobmaschigen physikalischen Zustandsgrößen, beispielsweise der Neutronenfluss, noch mit einer Formfunktion moduliert werden, die Ergebnis der vorstehend erwähnten, idealisierten pinweisen Berechnung einer Masche ist.

Zur Modellierung des Reaktors sind die neutronenphysikalischen und die thermohydraulischen Berechnungsverfahren (Codes) gekoppelt. Eine solche Kopplung ist beispielsweise für Siedewasserreaktoren in dem in [2] näher erläuterten Code IQSBWR implementiert. Für Druckwasserreaktoren ist aus [3] das gekoppelte Programmsystem PANBOX bekannt.

Das Ziel einer möglichst effizienten Ausnutzung des Kernbrennstoffs führt zu Beladungsstrategien des Kerns, die ausgeprägte heterogene axiale und radiale Leistungsverteilungen zur Folge haben. Darüber hinaus führt eine optimierte Auslegung der Brennstäbe oder Brennelemente (beispielsweise axiale und radiale Anreicherungsstaffelungen, Inhomogenitäten durch Struktureinbauten zur Verbesserung der Durchmischung (bei DWR und SWR), die Verwendung teillanger Stäbe zum Vermeiden von Dryout beim SWR) zusätzlich zu einer ausgeprägten Heterogenität innerhalb der Brennelemente. Um die möglichst effiziente Ausnutzung des Kernbrennstoffs unter Einhaltung ausreichender Sicherheitsreserven zu ermöglichen, werden an die numerischen Verfahren der Kernsimulatoren immer höhere Anforderungen gestellt. Die vorstehend erwähnten grobmaschigen nodalen Berechnungsverfahren stoßen unter solchen Bedingungen an Genauigkeitsgrenzen.

Grundsätzlich ist es möglich, eine feinmaschige, insbesondere pinweise Modellierung für den gesamten Kern vorzunehmen. Ein solches Verfahren ist für die neutronenphysikalische Modellierung beispielsweise in [4] näher erläutert. Bei diesem Verfahren werden die grobmaschigen nodalen Berechnungsverfahren auf die Pinebene übertragen, d. h. die Maschen auf Pin-Größe verkleinert. Dabei können die Berechnungsalgorithmen dem Grundsatz nach unverändert bleiben und lediglich die Anzahl der Maschen erhöht werden.

Für eine typische, zur Zeit im praktischen Einsatz befindliche nodale Modellierung eines Druckwasserreaktors mit z.B. 193 Brennelementen, bei welcher der Kern in der horizontalen Ebene in 193*4 Maschen aufgeteilt wird (4 Maschen pro Brennelement) und bei welcher für die Neutronik ein Zweienergiegruppenmodell angesetzt wird, und für die neutronenphysikalische Modellierung 15 bzw. für die thermohydraulische Modellierung 40 axiale Schichten verwendet werden, ergibt sich eine Gesamtzahl von 2*4*15*193 (Neutronik) + 4*40*193 (Thermohydraulik) ≈ 54*10³ Rechenmaschen.

Bei einer Modellierung auf Pin-Basis ist zusätzlich zur Erhöhung der Anzahl der räumlichen Maschen in der Horizontalebene auf 18*18 Pins (= Brenn- oder Steuerstäbe) pro Brennelement auch eine Erhöhung der Anzahl der axialen Schichten sowohl für die Neutronik als auch für die Thermohydraulik auf circa 100 erforderlich. Darüber hinaus ist es zur Verbesserung der Genauigkeit erforderlich, auch die Anzahl der betrachteten Energiegruppen zu erhöhen. Werden die Neutronen z.B. in 15 Energiegruppen eingeteilt, ergibt sich eine Gesamtzahl von etwa 15*324*100*193 + 324*100*193 ≈ 1*10⁸ Rechenmaschen. Dies erhöht die Problemgröße von gekoppelten neutronischthermohydraulischen Kernberechnungen auf Pinebene gegenüber den zur Zeit im praktischen Einsatz benutzten Codes um mehr als 3 Größenordnungen. Aufgrund des damit verbundenen hohen Rechenaufwandes sind die nach dem derzeitigen Stand der Technik bekannten pinweisen Modellierungen für die standardmäßige Unterstützung bei der Kernauslegung nicht geeignet.

Der Erfindung liegt nun die Aufgabe zugrunde, ein Verfahren zum rechnerischen Modellieren des Kerns eines Kernreaktors auf Pinbasis anzugeben, das mit einem für die Kernauslegung vertretbaren Rechenaufwand hinreichend präzise Ergebnisse ermöglicht.

Die genannte Aufgabe wird gemäß der Erfindung gelöst mit einem Verfahren mit den Merkmalen des Patentanspruches 1. Gemäß diesen Merkmalen wird der Kern zunächst in eine Vielzahl von Grobmaschen unterteilt. Zumindest einer Grobmasche wird ein diese enthaltendes Teilgebiet des Kerns zugeordnet, wobei dieses Teilgebiet diese Grobmasche und eine diese in der Horizontalebene umgebende Pufferzone aufweist, die wenigstens die dieser Grobmasche unmittelbar benachbarten Grobmaschen enthält. Dieses Teilgebiet wird wiederum in eine Vielzahl von Feinmaschen unterteilt, die feiner sind als die Grobmaschen. In einem ersten Rechenschritt wird dann auf der Grundlage des jeder Grobmasche jeweils zugeordneten Datensatzes ein Modell des Kerns mit einem nodalen Berechnungsverfahren berechnet. Anschließend wird in einem zweiten Rechenschritt auf der Grundlage des jeder Feinmasche dieses Teilgebietes jeweils zugeordneten zweiten Datensatzes und mit den im ersten Schritt berechneten Strömen am Rand dieses Teilgebietes mit einem nodalen Berechnungsverfahren ein Modell für dieses Teilgebiet berechnet.

Mit anderen Worten: In einem ersten Schritt werden für alle Grobmaschen des Kerns auf Basis der für diese Grobmaschen jeweils vorgegebenen Datensätze mittlere Ströme für jede Seitenfläche berechnet, z.B. wie in [5] dargestellt. In einem zweiten Schritt werden für ein Teilgebiet des Kerns, das eine ausgewählte Grobmasche überdeckt mit Hilfe von vorgegebenen, den Feinmaschen zugeordneten Datensätzen für jede Feinmasche des Teilgebietes feinmaschige Rechnungen durchgeführt. Dabei werden aus den im ersten Schritt ermittelten mittleren Strömen die äußeren Randbedingungen des Teilgebietes vorgegeben. Mit anderen Worten: Anstelle einer feinmaschigen Betrachtung des gesamten Kerns, wird dieser zunächst grobmaschig modelliert. Diese grobmaschige Modellierung liefert nun die Randbedingungen (Einstrombedingungen) für ein ausgewähltes Teilgebiet des Kerns, das mit diesen Randbedingungen feinmaschig modelliert wird. Zur Modellierung des gesamten Kerns wird dieser somit in sich überlappende Teilgebiete zerlegt, die die jeweils betrachtete Grobmasche, die beispielsweise geometrisch durch ein Brennelement gebildet ist, überdecken. Diese Teilgebiete können unabhängig voneinander feinmaschig modelliert werden, da die zu ihrer Modellierung notwendigen Randbedingungen und Datensätze bekannt sind.

Wesentlicher Vorteil des erfindungsgemäßen Verfahrens ist die Zerlegung der feinmaschigen Berechnung des gesamten Kerns in eine der Anzahl der Teilgebiete entsprechende Anzahl feinmaschig voneinander unabhängig berechenbarer Teilprobleme, die parallel zueinander, beispielsweise von einem PC-Clustersystem mit einer dieser Anzahl entsprechenden Anzahl paralleler Prozessoren bearbeitet werden können. Ein weiterer Vorteil dieses Lösungsansatzes ist darin zu sehen, dass er auf für die Genauigkeit der Lösung besonders kritische Teilbereiche des Kerns eingeschränkt und zusätzlich die Berechnung mit einem höherwertigen Modell durchgeführt werden kann.

Unter dem Begriff "Masche" ist in der vorliegenden Anmeldung entweder ein Knoten (für die neutronenphysikalische Modellierung) oder ein Kanal (für die thermohydraulische Modellierung) zu verstehen. Das der Erfindung zu Grunde liegende Konzept ist dabei sowohl für die neutronenphysikalische Modellierung als auch für die thermohydraulische Modellierung anwendbar.

In einer vorteilhaften Ausgestaltung des Verfahrens, besteht die die betrachtete Grobmasche umgebende Pufferzone aus den dieser Grobmasche unmittelbar benachbarten und mit ihr wechselwirkenden Grobmaschen. Mit anderen Worten: Die Breite der die betrachtete Grobmasche umgebenden Pufferzone entspricht der Breite einer Grobmasche. Die Erfindung geht dabei von der Überlegung aus, dass es zur feinmaschigen Modellierung eines Kerns, die vorzugsweise auf Pinebene, d. h. mit Feinmaschen erfolgt, die jeweils durch einen Pin definiert sind, ausreicht, nur die einer Grobmasche benachbarten und mit ihr in Wechselwirkung stehenden Grobmaschen einer feinmaschigen, vorzugsweise pinweisen Modellierung zu unterziehen, da das Ausmaß der Wechselwirkung zwischen den Grobmaschen mit deren gegenseitigen Abstand abnimmt. Mit anderen Worten: Weit voneinander beabstandete Grobmaschen nehmen sich nur noch hinsichtlich ihrer "gemittelten" Eigenschaften wahr. Die bei einer pinweisen Berechnung ermittelten Feinstrukturen innerhalb einer Grobmasche spielen bei der Betrachtung einer weit davon entfernten Grobmasche nur noch eine vernachlässigbare Rolle.

Wird die Grobmasche in einer horizontalen Querschnittsebene durch ein vollständiges Brennelement gebildet, so ergibt sich als bevorzugtes Teilgebiet, d. h. wenn nur die unmittelbar benachbarten Grobmaschen hinzugenommen werden, eine 3x3-Brennelementanordnung. Das Teilgebiet umfasst dann bei Druckwasserreaktoren sowohl für die Neutronik als auch für die Thermohydraulik 9 Grobmaschen (Knoten bzw. Kanäle).

Anders ist die Situation bei Siedewasserreaktoren, da dort die Brennelemente einen Kasten aufweisen, so dass die thermohydraulische Wechselwirkung zwischen horizontalen Grobmaschen, die in diesem Fall als Kanäle bezeichnet werden, auf die Maschen bzw. Kanäle begrenzt ist, die innerhalb des Brennelements liegen. Dadurch wird eine Aufspaltung des thermohydraulischen 3x3 Problems in 9 unabhängige Teilprobleme ermöglicht.

Auf der Basis des eingangs erläuterten Zahlenbeispiels wird bei einer solchen Vorgehensweise zwar zunächst der Rechenumfang einer pin-by-pin-Berechnung von 1*10⁸ auf (1+15)*324*100*193*9 ≈ 9*10⁸ um den Faktor 9 erhöht. Diese Erhöhung wird aber kompensiert durch die nunmehr mögliche Zerlegung des Gesamtproblems in 193 unabhängige, parallel zu berechnende Teilprobleme, deren Problemgröße dementsprechend bezogen auf den kernweiten Pinansatz um etwa den Faktor 20 kleiner und damit in vielerlei Hinsicht einfacher kontrollierbar ist. Zudem reduziert sich sogar der Gesamtrechenaufwand aller Teilprobleme gegenüber dem Rechenaufwand des Gesamtproblems, falls der Rechenaufwand des verwendeten Lösungsalgorithmus in etwa mehr als quadratisch mit der Problemgröße steigt.

Bei der Verwendung eines grobmaschigen nodalen Verfahrens, bei dem bei Druckwasserreaktoren das Brennelement in der horizontalen Ebene sowohl für die Neutronik als auch für die Thermohydraulik in vier Grobmaschen (Knoten bzw. Kanäle) aufgeteilt wird, umfasst das betrachtete Teilgebiet in einer horizontalen Schicht 16 Grobmaschen (Knoten bzw. Kanäle), von denen 4 das betrachtete Brennelement bilden, das von einer Pufferzone mit 12 Grobmaschen (Knoten bzw. Kanäle) umgeben ist, deren Breite einer halben Breite des Brennelements entspricht.

In einer besonders vorteilhaften Weiterbildung des Verfahrens wird der zweite Rechenschritt zusammen mit dem ersten Rechenschritt mehrfach durchgeführt, wobei für jede erneute Durchführung des zweiten Rechenschrittes die im vorangegangen ersten Rechenschritt für die jeweiligen Teilgebiete berechneten Ströme am Rand dieses Teilgebietes verwendet werden, während für den nachfolgenden ersten Rechenschritt die nodalen Datensätze aus dem zweiten Rechenschritt ermittelt werden. Dadurch wird einerseits die Genauigkeit des ermittelten nodalen Kernmodells erhöht, andererseits dient die Konvergenz der sich iterativ ergebenden Lösungen zusätzlich als Indiz für die Verlässlichkeit des Verfahrens.

Die Erfindung wird weiter anhand der Zeichnungen erläutert. Es zeigen:
- Fig. 1: einen Ausschnitt aus einem Kern, bei dem ein Knoten eine horizontale Schicht eines gesamten Brennelementes bildet,
- Fig. 2: einen Ausschnitt aus einem Kern, bei dem eine horizontale Schicht eines gesamten Brennelementes durch vier Knoten gebildet ist.

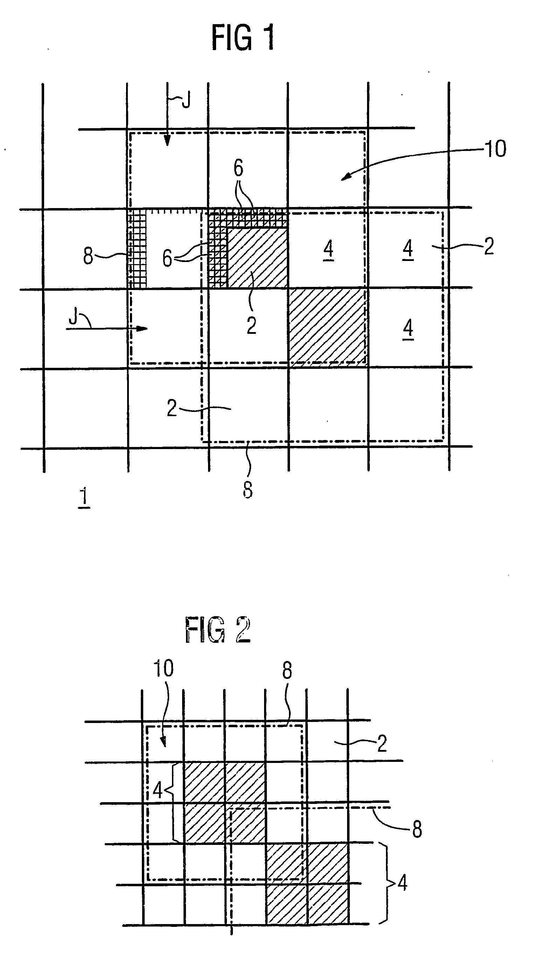

Gemäß Fig. 1 wird der Kern 1 eines Kernreaktors zur Modellierung gemäß der Erfindung in eine Vielzahl von Grobmaschen 2 (Knoten oder Kanäle) aufgeteilt, die im Ausführungsbeispiel jeweils durch einen sich in axialer Richtung (senkrecht zur Zeichenebene) erstreckenden Abschnitt (Schicht) eines gesamten Brennelementes 4 gebildet sind, wobei im Ausführungsbeispiel 100 solcher Abschnitte vorgesehen sind. Auf der Basis einer solchen den gesamten Kern umfassenden Aufteilung werden die zur Charakterisierung der physikalischen Eigenschaften des Kerns 1 erforderlichen Parameter, beispielsweise für die neutronenphysikalische Modellierung mit einem nodalen Multigruppenverfahren, beispielsweise einem NEM-Verfahren (/1/), bestimmt. Im dargestellten Ausführungsbeispiel, das insbesondere für die Modellierung eines Druckwasserreaktorkerns geeignet ist, fallen die für die thermohydraulische Berechnung verwendeten Grobmaschen 2 (Kanäle) mit den für die neutronenphysikalische Berechnung verwendeten Grobmaschen 2 (Knoten) zusammen. Dies ist jedoch nicht grundsätzlich erforderlich. Vielmehr können die Grobmaschen 2 für die neutronenphysikalische und die thermohydraulische Berechnung auch eine unterschiedliche Aufteilung aufweisen. So ist es bei einem Siedewasserreaktor zweckmäßig, für die thermohydraulische Darstellung eines Brennelementes in einer horizontalen Schicht 3 Kanäle zu verwenden.

Jede Grobmasche 2 enthält eine Vielzahl von Feinmaschen 6, bei denen es sich vorzugsweise um Pins, d. h. um Elemente innerhalb eines Brennelementes, beispielsweise Brennstäbe, Steuerstäbe, Steuerstabführungsrohre, Wasserrohre usf. handelt, die physikalisch sinnvoll zu einer Untereinheit zusammengefasst werden können.

Jeder Grobmasche 2 wird ein diese enthaltendes Teilgebiet 8 des Kerns 1 zugeordnet, wobei dieses Teilgebiet 8 diese Grobmasche 2 und eine diese in der Horizontalebene umgebende Pufferzone 10 aufweist, die wenigstens die dieser Grobmasche 2 unmittelbar benachbarten Grobmaschen 2 enthält. Diese Pufferzone 10 wird im Ausführungsbeispiel durch die der innenliegenden Masche 2 unmittelbar benachbarten Maschen gebildet und entspricht damit der Breite eines Brennelements.

Dieses Teilgebiet 8 ist durch die Vielzahl von Feinmaschen 6 unterteilt. Auf diese Weise entstehen eine der Anzahl der Grobmaschen 2 entsprechende Anzahl von Teilgebieten 8, die sich einander überlappen. Mit anderen Worten: Der Kern 1 wird in eine der Anzahl der Brennelemente 4 entsprechende Anzahl von sich überlappenden Teilgebieten 8 aufgeteilt.

Jeder Grobmasche 2 ist wie eingangs erläutert ein Datensatz zugeordnet, auf dessen Grundlage in einem ersten Rechenschritt eine grobmaschige neutronenphysikalische und thermohydraulische Berechnung des gesamten Kerns 1 mit einem der eingangs benannten nodalen Verfahren erfolgt, beispielsweise für einen Druckwasserreaktorkern die unter dem Handelsnamen bekannten Codes PANBOX mit COBRA oder bei einem Siedewasserreaktorkern mit den Codes MICROBURN-B2 mit COBRA, wobei grundsätzlich jedes qualifizierte nodale Berechnungsverfahren verwendet werden kann.

Anschließend wird in einem zweiten Rechenschritt auf der Grundlage des jeder Feinmasche 6 eines Teilgebietes 8 jeweils zugeordneten zweiten Datensatzes und mit den im ersten Rechenschritt berechneten integralen, d. h. jeweils auf die gesamte Grobmasche 2 bezogenen mittleren Strömen J am Rand dieses Teilgebietes 8 mit einem nodalen Berechnungsverfahren ein Modell für dieses Teilgebiet 8 berechnet. Dabei können z.B. die jeweils auf eine gesamte Grobmasche 2 bezogenen integralen Ströme J mit einer vorgegebenen, die konkreten Verhältnisse der jeweiligen Grobmasche 2 berücksichtigenden Formfunktion auf die einzelnen Feinmaschen 6 (Pins) aufgeteilt.

Die im zweiten Rechenschritt erfolgende feinmaschige, insbesondere pinweise Berechnung führt nun zu einer genauen Lösung für die in der Mitte des Teilgebiets 8 befindliche Grobmasche 2, im Beispiel ein Abschnitt eines Brennelements. Die um das Brennelement bzw. der innenliegenden Grobmasche 2 gebildete Pufferzone 10 dient dabei zur Ausfilterung der durch die grobmaschige nodale Modellierung nur näherungsweise korrekten lokalen Randbedingungen.

Die gleiche Aufteilung des Kerns 1 in Teilgebiete 8 wird auch hinsichtlich der neutronenphysikalischen Modellierung bei einem Siedewasserreaktorkern vorgenommen. Abweichend hierzu ist jedoch bei der thermohydraulischen feinmaschigen oder pinweisen Berechnung eine horizontale Pufferzone wegen der fehlenden Massenströme (kein Queraustausch von Wasser oder Dampf) zwischen benachbarten Brennelementen nicht erforderlich.

Eine verlässliche Lösung ist dann erreicht, wenn lokale Lösungen auf feinmaschiger Ebene und globale Lösung auf grobmaschiger Ebene bei der Iteration zwischen Grob- und Feinmasche konvergieren.

Im Ausführungsbeispiel gemäß Fig. 2 wird bei einer genaueren grobmaschigen nodalen Modellierung eines Druckwasserreaktorkerns das Brennelement 4 für die Neutronik und die Thermohydraulik in 4 Grobmaschen 2 (Knoten bzw. Kanäle) aufgeteilt.

Das Teilgebiet 8 umfasst in diesem Ausführungsbeispiel ebenfalls nur die dem in der Mitte liegenden Brennelement 4 unmittelbar benachbarten Grobmaschen 2, so dass die Breite der Pufferzone 10 einer halben Brennelementbreite entspricht.

Bei einer genaueren grobmaschigen nodalen Modellierung eines Siedewasserreaktorkerns wird für die Neutronik in der Regel die Aufteilung von einer Grobmasche (Knoten) pro Brennelement beibehalten. Für die Thermohydraulik wird jedes Brennelement in drei Grobmaschen (Kanäle) aufgeteilt, wobei wiederum eine horizontale Pufferzone nicht erforderlich ist.
[1] H. Finnemann et al., Interface current techniques for multidimensional reactor calculations, Atomkernenergie, Bd. 30, 1977, S. 123 - 128
[2] H. Finnemann, W. Gundlach, Space-time kinetics code IQSBOX for PWR and BWR, Atomkernenergie - Kerntechnik, Bd. 37, 1981
[3] R. Böer et al., The code system PANBOX for PWR safety analysis, Kerntechnik 57, 1992, No. 1
[4] M. Tatsumi, A. Yamamoto, SCOPE 2: OBJECT-ORIENTED PARALLEL CODE FOR MULTI-GROUP DIFFUSION/TRANSPORT CALCULATIONS IN THREE-DIMENSIONAL FINE-MESH REACTOR CORE GEOMETRY, PHYSOR 2002, Seoul, Korea, October 7 - 10, 2002
[5] M.R: Wagner, K.Koebke, H.-J. Winter, A nonlinear Extension of the Nodal Expansion Method, Proc. ANS/ENS Intl. Topical Mtg., Munich, FRG, 2, p. 43, April 1981

### Bezugszeichenliste

- 1: Kern
- 2: Grobmaschen
- 3: horizontale Schicht
- 4: Brennelement
- 6: Feinmaschen
- 8: Teilgebiet
- 10: Pufferzone

- J: Strom

## Patentansprüche

1. Rechnergestütztes Verfahren zum rechnerischen Modellieren des Kerns (1) eines Kernreaktors, umfassend folgende Verfahrensschritte:
a) der Kern (1) wird in eine Vielzahl von Grobmaschen (2) unterteilt,
b) zumindest einer Grobmasche (2) wird ein diese enthaltendes Teilgebiet (8) des Kerns (1) zugeordnet, wobei dieses Teilgebiet (8) diese Grobmasche (2) und eine diese in der Horizontalebene umgebende Pufferzone (10) aufweist, die wenigstens die dieser Grobmasche (2) unmittelbar benachbarten Grobmaschen (2) enthält,
c) das Teilgebiet (8) wird in eine Vielzahl von Feinmaschen (6) unterteilt, die feiner sind als die Grobmaschen (2),
d) auf der Grundlage des jeder Grobmasche (2) jeweils zugeordneten Datensatzes wird in einem ersten Rechenschritt ein Modell des Kerns (1) mit einem nodalen Berechnungsverfahren berechnet,
e) auf der Grundlage des jeder Feinmasche (6) eines Teilgebietes (8) jeweils zugeordneten zweiten Datensatzes und mit den im ersten Rechenschritt berechneten Strömen (J) am Rand dieses Teilgebietes (8) wird in einem zweiten Rechenschritt mit einem nodalen Berechnungsverfahren ein Modell für dieses Teilgebiet (8) berechnet.

2. Verfahren nach Anspruch 1, bei dem der zweite Rechenschritt für alle Grobmaschen (2) durchgeführt wird.

3. Verfahren nach Anspruch 1 oder 2, bei dem die Pufferzone (10) um die betrachtete Grobmasche (2) aus den dieser Grobmasche (2) unmittelbar benachbarten und mit ihr wechselwirkenden Grobmaschen (2) besteht.

4. Verfahren nach einem der vorhergehenden Ansprüche, bei denen die Feinmaschen (6) durch Pins gebildet sind.

5. Verfahren nach einem der vorhergehenden Ansprüche, bei dem eine Grobmasche (2) in einer horizontalen Querschnittsebene durch ein vollständiges Brennelement (4) gebildet ist.

6. Verfahren nach einem der Ansprüche 1 bis 4, bei dem in einer horizontalen Querschnittsebene pro Brennelement (4) vier Grobmaschen (2) vorgesehen sind.

7. Verfahren nach einem der Ansprüche 2 bis 6, bei dem der zweite Rechenschritt zusammen mit dem ersten Rechenschritt mehrfach durchgeführt wird, wobei für jede erneute Durchführung des zweiten Rechenschrittes die im vorangegangen ersten Rechenschritt für die jeweiligen Teilgebiete (10) berechneten Ströme (J) am Rand dieses Teilgebietes (10) verwendet werden.

8. Verfahren zum Auslegen des Kerns (1) eines Kernreaktors, bei dem ein Verfahren nach einem der vorhergehenden Ansprüche verwendet wird.

9. Kernsimulator mit einem in ihm implementierten Rechenprogramm zum Durchführen eines Verfahrens nach einem der Ansprüche 1 bis 6.

## Claims

1. Computer-aided method for computer modeling the core (1) of a nuclear reactor, comprising the following method steps:
a) the core (1) is subdivided into a multiplicity of coarse mesh cells (2),
b) at least one coarse mesh cell (2) is assigned a subregion (8) of the core (1) which contains it, this subregion (8) comprising this coarse mesh cell (2) and a buffer zone (10), which encloses it in the horizontal direction and contains at least the coarse mesh cells (2) immediately next to this coarse mesh cell (2),
c) the subregion (8) is subdivided into a multiplicity of fine mesh cells (6), which are finer than the coarse mesh cells (2),
d) on the basis of the dataset respectively assigned to each coarse mesh cell (2), a model of the core (1) is calculated by a nodal calculation method in a first computation step,
e) on the basis of the second dataset respectively assigned to each fine mesh cell (6) of a subregion (8) and with the fluxes (J) at the boundary of this subregion (8) as calculated in the first computation step, a model for this subregion (8) is calculated by a nodal calculation method in a second computation step.

2. Method according to Claim 1, wherein the second computation step is carried out for all the coarse mesh cells (2).

3. Method according to Claim 1 or 2, wherein the buffer zone (10) around the coarse mesh cell (2) in question consists of the coarse mesh cells (2) which are immediately next to this coarse mesh cell (2) and interact with it.

4. Method according to one of the preceding claims, wherein the fine mesh cells (6) are formed by pins.

5. Method according to one of the preceding claims, wherein a coarse mesh cell (2) in a horizontal cross-sectional plane is formed by a complete fuel element (4).

6. Method according to one of Claims 1 to 4, wherein four coarse mesh cells (2) per fuel element (4) are provided in a horizontal cross-sectional plane.

7. Method according to one of Claims 2 to 6, wherein the second computation step is carried out several times together with the first computation step, each repeated execution of the second computation step using the fluxes (J) at the boundary of the subregion (10) as calculated for the respective subregions (10) in the preceding first computation step.

8. Method for designing the core (1) of a nuclear reactor, wherein a method according to one of the preceding claims is used.

9. Nuclear simulator having a computer program installed in it for carrying out a method according to one of Claims 1 to 6.

## Revendications

1. Procédé assisté par ordinateur de modélisation informatique du coeur (1) d'un réacteur nucléaire comprenant des stades de procédé suivants :
a) on subdivise le coeur (1) en une pluralité de mailles (2) grossières ;
b) on affecte à au moins une maille (2) grossière un sous-domaine (8) du coeur (1) la contenant, ce sous-domaine (8) comportant cette maille (2) grossière et une zone (10) tampon l'entourant dans le plan horizontal et contenant les mailles (2) grossières immédiatement voisines de cette maille (2) grossière ;
c) on subdivise le sous-domaine (8) en une pluralité de mailles (6) fines qui sont plus fines que les mailles (2) grossières ;
d) sur la base du jeu de données affecté, respectivement, à chaque maille (2) grossière, on calcule dans un premier stade de calcul un modèle du coeur (1) par un procédé de calcul nodal ;
e) Sur la base du deuxième jeu de données affecté, respectivement, à chaque maille (6) fine d'un sous-domaine (8) et avec les courants (J) calculés dans le premier stade de calcul au bord de ce sous-domaine (8), on calcule dans un deuxième stade de calcul un modèle pour ce sous-domaine (8) par un procédé de calcul nodal.

2. Procédé suivant la revendication 1, dans lequel on effectue le deuxième stade de calcul pour toutes les mailles (2) grossières.

3. Procédé suivant la revendication 1 ou 2, dans lequel la zone (10) tampon autour de la maille (2) grossière considérée est constituée des mailles (2) grossières directement voisines de cette maille (2) grossière et de mailles (2) grossières interagissant avec elle.

4. Procédé suivant l'une des revendications précédentes, dans lequel les mailles (6) fines sont formées par des aiguilles.

5. Procédé suivant l'une des revendications précédentes, dans lequel une maille (2) grossière est formée dans un plan de coupe transversale horizontal par un assemblage combustible (4) complet.

6. Procédé suivant l'une des revendications 1 à 4, dans lequel il est prévu dans un plan en coupe transversale horizontal, par assemblage combustible (4), quatre mailles (2) grossières.

7. Procédé suivant l'une des revendications 2 à 6, dans lequel on effectue le deuxième stade de calcul ensemble avec le premier stade de calcul plusieurs fois en utilisant chaque fois que l'on renouvelle le deuxième stade de calcul les courants (J) calculés dans le premier stade de calcul précédent pour les sous-domaines (10) respectifs au bord de ce sous-domaine (10).

8. Procédé de mise en place du coeur d'un réacteur nucléaire dans lequel on utilise un procédé suivant l'une des revendications précédentes.

9. Simulateur de coeur comprenant un programme information qui est mis en oeuvre pour effectuer un procédé suivant l'une des revendications 1 à 6.
